# EUROPÄISCHE PATENTSCHRIFT

(11) **EP 2 690 995 B1**
(45) Veröffentlichungstag und Bekanntmachung des Hinweises auf die Patenterteilung: **31.12.2014**
(21) Anmeldenummer: 12707025.8
(22) Anmeldetag: 24.02.2012
(51) Int. Cl.: A47J 41/00, B65D 47/24

(54) **BEHÄLTERVERSCHLUSS**
CONTAINER CLOSURE
FERMETURE DE RÉCIPIENT

(30) Priorität: 29.03.2011 CH 572112011
(43) Veröffentlichungstag der Anmeldung: 05.02.2014
(73) Patentinhaber: PI-Design AG, 6234 Triengen (CH)
(72) Erfinder: BODUM, Jørgen, CH-6045 Meggen (CH)
(74) Vertreter: Rutz, Andrea
(86) Internationale Anmeldenummer: PCT/CH2012/000047
(87) Internationale Veröffentlichungsnummer: WO 2012/129712

(56) Entgegenhaltungen:
- WO-A1-2010/003258
- WO-A2-2010/031198
- DE-A1- 3 342 356
- US-A1- 2003 226 859
- US-A1- 2004 108 336

## Beschreibung

### TECHNISCHES GEBIET

Die vorliegende Erfindung betrifft einen Behälterverschluss zum Verschliessen eines Gefässes. Der Verschluss weist eine Ausgiessöffnung auf, welche via einen in vertikaler Richtung bedienbaren Verschlusshebel mit einem Verschlusskörper verschliessbar ist.

### STAND DER TECHNIK

Im Dokument WO 2009/149568 ist ein Getränkebehälter in Form einer sogenannten "French Press" offenbart. Zur Zubereitung von beispielsweise Kaffee oder Tee wird bei diesem Getränkebereiter ein Filterkolben in das Gefäss eingesetzt und hinabgedrückt, so dass ein Stempelfilter das trinkfertige Getränk vom ausgelaugten Kaffeepulver bzw. den Teeblättern trennt. Um beim Hinunterdrücken des Filterkolbens die Gefahr zu verringern, dass sich der Benutzer durch herausspritzende heisse Flüssigkeit verbrüht, wird in diesem Dokument ein Verschluss angegeben, bei welchem eine Ausgiessöffnung durch einen an einem Verschlusshebel angebrachten Verschlusskörper verschliessbar ist. Durch Verschwenken des federbelasteten Verschlusshebels kann die Ausgiessöffnung auf einfache Art und Weise freigegeben und das im Gefäss des Getränkebehälters aufgenommene Getränk ausgeschenkt werden.

Nachteilig beim oben erwähnten Behälterverschluss mit Verschlusshebel ist es, dass während dem Ausschenken des Getränks ständig ein Druck auf den Verschlusshebel ausgeübt werden muss, um diesen gegen die Federkraft in der Öffnungsstellung zu halten. Dies ist insbesondere dann umständlich, wenn das Ausschenken über eine längere Zeitspanne andauert. Dies ist beispielsweise dann der Fall, wenn das sich im Behälter befindliche Getränk für eine Vielzahl von Personen vorgesehen ist, welche unmittelbar nacheinander bedient werden müssen, wie dies beispielsweise in Restaurationsbetrieben oder im Verpflegungsservice für Passagiere in der Luftfahrt oft vorkommt.

In den Dokumenten US 2004/0108336 und DE 295 04 343 sind jeweils Behälterverschlüsse offenbart, bei welchen der Verschlusshebel in seiner Öffnungsstellung blockiert werden kann. In der US 2004/0108336 ist dazu ein am Verschlusshebel angebrachtes Schiebeelement vorgesehen, welches den Verschlusshebel in der Öffnungsstellung mittels Anschlag nach oben hin gegen eine Federkraft nach unten drückt. Bei der DE 295 04 343 arretiert ein Federhebel den Verschlusshebel in der Öffnungsstellung. Um den Verschlusshebel zurück in die Verschliessstellung zu bringen, wird ein Lösehebel betätigt, welcher den Federhebel vom Verschlusshebel wegdrückt.

Diese beiden beschriebenen Behälterverschlüsse, bei denen der Verschlusshebel in seiner Öffnungsstellung blockierbar ist, sind verhältnismässig aufwendig hergestellt, da für das Vorsehen der Blockierfunktion jeweils zusätzliche Bauteile notwendig sind.

### DARSTELLUNG DER ERFINDUNG

Es ist also eine Aufgabe der vorliegenden Erfindung, einen Behälterverschluss (Deckel) anzugeben, welcher möglichst einfach in der Herstellung ist, und bei welchem ein Verschlusshebel auf eine möglichst einfache Art und Weise in seiner Öffnungsstellung blockierbar ist.

Diese Aufgabe wird durch einen Behälterverschluss mit den Merkmalen des Anspruchs 1 und durch einen Getränkebehälter gemäss Anspruch 12 mit einem derartigen Behälterverschluss gelöst. Weitere Ausführungsformen sind in den abhängigen Ansprüchen angegeben.

Orts- und Richtungsangaben wie oben, unten, nach oben hin, vertikal etc. beziehen sich jeweils auf einen aufrecht stehenden Getränkebehälter mit einem Gefäss, in welchem ein Getränk aufgenommen ist, und welches in einer bestimmungsgemässen Weise durch einen Behälterverschluss verschlossen ist. Das Gefäss weist üblicherweise eine im Wesentlichen zylindrische Form auf, oder hat zumindest einen im Wesentlichen runden Querschnitt, und weist zudem eine obere, in der Regel runde Gefässöffnung auf. Der Behälterverschluss ist üblicherweise an die Gefässöffnung angepasst und weist daher ebenfalls in der Regel eine runde Grundform auf, welche eine radiale Richtung, eine Umfangsrichtung sowie eine senkrecht dazu stehende Längsachse definiert. Die vertikale Richtung erstreckt sich dann üblicherweise entlang der Schwerkraftsrichtung. Eine Richtung verläuft quer zu einer anderen Richtung, wenn der dazwischen liegende Winkel mindestens 45° beträgt, bevorzugt wenn die Richtungen sogar im Wesentlichen senkrecht zueinander stehen.

Die vorliegende Erfindung stellt also einen Behälterverschluss zum Verschliessen, insbesondere zum fluiddichten Verschliessen eines Gefässes mit einem Gefässinnenraum zur Verfügung, aufweisend:
eine Ausgiessöffnung, welche dazu dient, eine Fluidverbindung vom Gefässinnenraum nach aussen hin zu bilden, um Flüssigkeit aus dem Gefäss auszugiessen;
einen Verschlusskörper, mittels welchem die Ausgiessöffnung verschliessbar ist; sowie
einen mit dem Verschlusskörper zusammenwirkenden Verschlusshebel mit einem Betätigungsbereich, der durch Druck mit einem Finger des Benutzers in einer Betätigungsrichtung bedienbar ist, um den Verschlusshebel von einer Verschliessstellung, in welcher der Verschlusskörper die Ausgiessöffnung verschliesst, in eine Öffnungsstellung, in welcher der Verschlusskörper die Ausgiessöffnung freigibt, zu verschwenken.

Der Behälterverschluss weist ausserdem ein Drehelement auf, welches relativ zum Verschlusshebel um eine Achse verdrehbar ist, die sich im Wesentlichen in dieselbe Richtung wie die Betätigungsrichtung erstreckt, um in einer Blockierstellung einen Anschlag mit dem Verschlusshebel zu bilden und den Verschlusshebel dadurch in seiner Öffnungsstellung zu blockieren und in einer Freigabestellung ein Verschwenken des Verschlusshebels zwischen der Verschliessstellung und der Öffnungsstellung zu erlauben.

Bei einem derartigen Behälterverschluss bedient der Benutzer also einen Verschlusshebel, um die Ausgiessöffnung zu öffnen und das im Gefäss enthaltene Getränk auszugiessen. Zum Blockieren des Verschlusshebels in der Öffnungsstellung wird das Drehelement in die Blockierstellung verdreht, in welcher es einen Anschlag mit dem Verschlusshebel bildet, um diesen zu blockieren. Das Blockieren bezieht sich dabei auf den Umstand, dass der Verschlusshebel nicht mehr in die Verschliessstellung gebracht werden kann. Zum Ausschenken eines Getränks kann so der Benutzer den Getränkebehälter mit einer Hand an einem bevorzugt vorhandenen Haltegriff ergreifen, den Verschlusshebel zum Beispiel mit dem Daumen derselben Hand in die Öffnungsstellung bringen und das Drehelement mit der anderen Hand verdrehen, um den Verschlusshebel zu blockieren und das Getränk anschliessend auszuschenken.

Die Bedienung eines derartigen Behälterverschlusses erfolgt somit einfach und intuitiv. Zudem erlaubt ein derartig ausgestalteter Behälterverschluss insbesondere eine einfache Herstellung aus möglichst wenigen Einzelbauteilen.

Vorzugsweise stellt der Behälterverschluss als Ganzes ein eigenständiges Element dar, welches zum Verschliessen eines separat dazu ausgebildeten Gefässes dient. Der Behälterverschluss ist dabei bevorzugt in eine obere Gefässöffnung des Gefässes einsetzbar. In alternativen Ausführungsformen kann der Behälterverschluss aber auch als eine Einheit oder zumindest sogar teilweise einstückig mit dem Gefäss ausgebildet sein. So kann beispielsweise die Ausgiessöffnung durch das Gefäss selbst definiert sein.

Der Verschlusshebel kann auf beliebige Art und Weise mit dem Verschlusskörper zusammenwirken. Der Verschlusskörper kann insbesondere und bevorzugt direkt am Verschlusshebel angebracht sein.

Der Betätigungsbereich des Verschlusshebels kann grundsätzlich in eine beliebige Betätigungsrichtung bedienbar sein, bevorzugt ist er jedoch im Wesentlichen in die vertikale Richtung bedienbar (im Sinne der oben definierten Richtungsangaben). Insbesondere bevorzugt ist der Bedienbereich derart bedienbar, dass er zum Öffnen der Ausgiessöffnung nach unten gedrückt werden muss. Der Verschlusshebel ist dann zum Beispiel mit dem Daumen einfach in seiner Öffnungsstellung haltbar, währenddem das Getränk ausgeschenkt wird, wenn das Drehelement nicht in der Blockierstellung ist. In der Blockierstellung bildet das Drehelement bei einem derart bedienbaren Verschlusshebel einen Anschlag nach oben hin (d.h. entgegen der Betätigungsrichtung) und weist daher bevorzugt ein nach unten (d.h. in die Betätigungsrichtung) ragendes Anschlagelement auf. Vorteilhaft bildet das Drehelement den Anschlag mit dem Betätigungsbereich des Verschlusshebels oder mit einem Bereich des Verschlusshebels, welcher sich unmittelbar angrenzend zum Betätigungsbereich befindet. Der in der Öffnungsstellung blockierte Zustand des Verschlusshebels ist für den Benutzer dann besonders gut erkennbar.

Vorteilhaft ist der Verschlusshebel in Richtung seiner Verschliessstellung federbelastet. In der Freigabestellung des Drehelements ist die Ausgiessöffnung dann automatisch verschlossen, wenn der Verschlusshebel vom Benutzer nicht betätigt wird. Dazu wird vorzugsweise eine Druckfeder verwendet.

In einer besonders bevorzugten Ausführungsform weist der Behälterverschluss eine Rückhaltestruktur auf, welche an einem Bereich des Behälterverschlusses angebracht ist, gegenüber dem das drehbare Element zwischen der Blockierstellung und der Freigabestellung verdrehbar ist. Das drehbare Element weist bei dieser Ausführungsform eine Hintergreifstruktur auf, welche in der Blockierstellung derart mit der Rückhaltestruktur zusammenwirkt, dass eine Bewegung des drehbaren Elements entgegen der Betätigungsrichtung, gegenüber dem genannten Bereich verhindert ist. Die Rückhaltestruktur und die Hintergreifstruktur verhindern somit insbesondere im Fall eines federbelasteten Verschlusshebels, dass dieser das Drehelement aufgrund seiner Federkraft in der Blockierstellung in die Betätigungsrichtung wegdrückt. Ein Entfernen des Drehelementes vom Verschluss zum Beispiel zu Reinigungszwecken ist dadurch aber weiterhin einfach möglich, indem das Drehelement in die Freigabestellung gebracht wird.

Vorzugsweise bilden die Rückhaltestruktur und die Hintergreifstruktur in der Blockierstellung einen Drehanschlag. Ein Überdrehen des Drehelements über die vorgesehene Blockierstellung hinaus wird dadurch verhindert. Die Rückhaltestruktur und/oder die Hintergreifstruktur können dazu insbesondere L-förmig ausgestaltet sein. Ein Arm einer solchen L-förmigen Rückhalte- oder Hintergreifstruktur verläuft dabei bevorzugt in Umfangsrichtung und bildet eine Führung für die Hintergreif- bzw. Rückhaltestruktur beim Verdrehen des Drehelements in die Blockierstellung. In der Blockierstellung dient dieser in Umfangsrichtung verlaufende Arm dann dazu, das Drehelement hinsichtlich einer Bewegung entgegen der Betätigungsrichtung zurückzuhalten. Der andere Arm verläuft bevorzugt in die Betätigungsrichtung und bildet einen Anschlag für die Hintergreif- bzw. Rückhaltestruktur in die Umfangsrichtung. Die Hintergreifstruktur und die Rückhaltestruktur können zudem auch dazu ausgebildet sein, in der Blockierstellung eine Bajonettverbindung miteinander einzugehen.

In einer bevorzugten Ausführungsform weist der Behälterverschluss eine Deckwand auf, innerhalb welcher die Ausgiessöffnung angeordnet ist. Die Deckwand ist dazu ausgebildet, das Gefäss nach oben hin zumindest teilweise zu überdecken, um gemeinsam mit dem Gefäss den Gefässinnenraum zu begrenzen. Insbesondere bevorzugt überdeckt die Deckwand das Gefäss mit Ausnahme der Ausgiessöffnung nach oben hin sogar vollständig. Vorzugsweise erstreckt sich die Deckwand im Wesentlichen in einer horizontalen Ebene.

Der Verschlusshebel ist bevorzugt oberhalb der Deckwand gelagert. Vorteilhaft ist er dabei unterhalb dem Drehelement, also zwischen dem Drehelement und der Deckwand angeordnet. Er kann dabei grundsätzlich um eine beliebige Achse verschwenkbar sein, bevorzugt ist er jedoch um eine horizontale Achse schwenkbar gelagert.

In einer insbesondere bevorzugten Ausführungsform umfasst der Behälterverschluss ein Unterteil, welches die Deckwand bildet, sowie ein davon getrennt ausgebildetes, das Unterteil und den Verschlusshebel zumindest teilweise, vorteilhaft aber vollständig überdeckendes Oberteil, welches gegenüber dem Unterteil verdrehbar ist, und welches das drehbare Element bildet. Bevorzugt sind das Oberteil und Unterteil dabei in einem zentralen Bereich drehbar miteinander verbunden.

Falls eine Rückhaltestruktur vorgesehen ist, ist diese bevorzugt aussenseitig am Unterteil angeordnet. Die Hintergreifstruktur ist, falls vorhanden, bevorzugt an einer radial nach innen weisenden Fläche des Oberteils angebracht.

Das Oberteil weist bevorzugt eine sich nach unten hin erstreckende Lasche auf, welche in der Blockierstellung einen Anschlag mit dem Verschlusshebel bildet. Bei Vorhandensein einer Rückhaltestruktur ist diese bevorzugt an der Lasche und insbesondere bevorzugt in einem unteren Bereich der Lasche angeordnet.

Vorzugsweise weist das Unterteil eine radiale Begrenzungsfläche auf, und die Lasche ist in radialer Richtung ausserhalb dieser radialen Begrenzungsfläche angeordnet. Vorteilhaft weist das Unterteil zudem eine sich von der Deckwand nach oben hin erstreckende, umlaufende Seitenwand auf, welche diese radiale Begrenzungsfläche bildet. In der umlaufenden Seitenwand kann eine Ausnehmung für den Verschlusshebel vorgesehen sein. Vorteilhaft ist zudem innerhalb dieser Seitenwand ein Ausgiesser ausgebildet.

Die vorliegende Erfindung stellt ausserdem einen Getränkebehälter mit einem derartigen Behälterverschluss bereit. Der Getränkebehälter weist ausserdem ein Gefäss mit einem Gefässboden und einer umlaufenden Seitenwand auf.

Bevorzugt handelt es sich beim Getränkebehälter um einen Getränkebereiter mit einem im Gefäss vertikal verschiebbaren Filterkolben, welcher eine Kolbenstange aufweist, die den Behälterverschluss durchsetzt. Dabei durchsetzt die Kolbenstange bevorzugt auch den Verschlusshebel.

Falls der Behälterverschluss eine Rückhaltestruktur aufweist, kann diese insbesondere auch am Gefäss oder an einem Gefässhalter, in welchem das Gefäss gehalten ist, angebracht sein.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Teilansicht eines Getränkebehälters gemäss einer erfindungsgemässen Ausführungsform, mit dem Verschlusshebel in der Verschliessstellung;
- Fig. 2: eine perspektivische Teilansicht des Getränkebehälters der Fig. 1, mit dem Verschlusshebel in der blockierten Öffnungsstellung;
- Fig. 3: eine Teilansicht eines zentralen Schnittes durch den Getränkebehälter der Fig. 1, mit dem Verschlusshebel in der Verschliessstellung;
- Fig. 4: eine Teilansicht eines zentralen Schnittes durch den Getränkebehälter der Fig. 1, mit dem Verschlusshebel in der blockierten Öffnungsstellung; sowie
- Fig. 5: eine perspektivische Ansicht von schräg unten des Deckeloberteils des Getränkebehälters der Fig. 1.

### BESCHREIBUNG BEVORZUGTER AUSFÜHRUNGSFORMEN

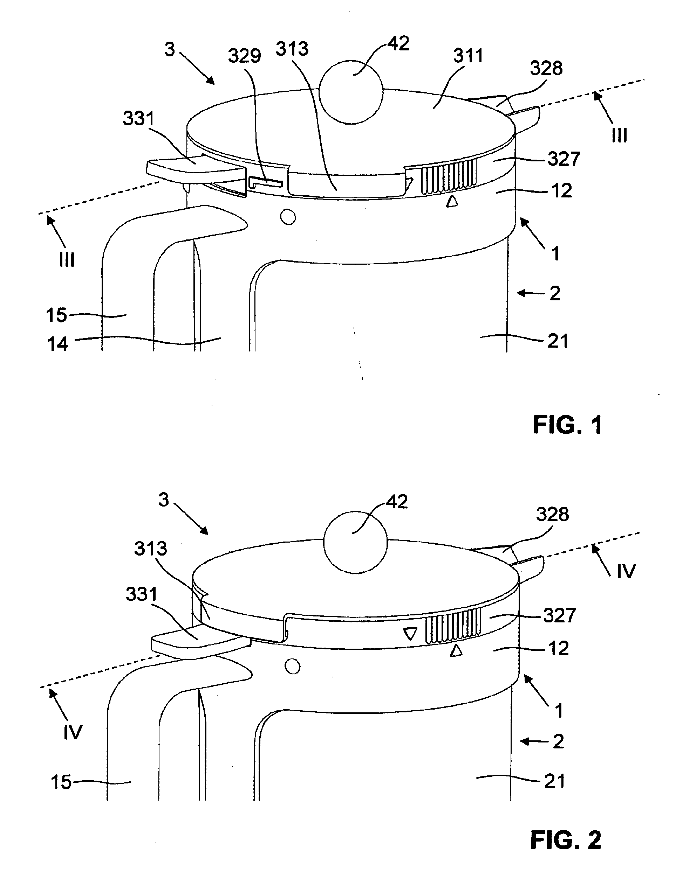

In den Figuren 1 bis 5 ist ein bevorzugtes Ausführungsbeispiel eines erfindungsgemässen Deckels 3 in verschiedenen Darstellungen gezeigt. Der Deckel 3 bildet in diesem Ausführungsbeispiel zusammen mit dem Gefäss 2, in welchem er eingesetzt ist, und welches durch den Deckel 3 verschliessbar ist, einen Getränkebehälter in Form einer Stempelfilter-Kaffeekanne. Die in den Figuren 1 bis 5 gezeigte Ausführungsform stellt eine Weiterentwicklung des Getränkebehälters aus dem Dokument WO 2009/149568 dar, dessen Offenbarungsgehalt daher hiermit ausdrücklich mittels Verweis in die vorliegende Beschreibung aufgenommen wird.

Der Getränkebereiter umfasst einen Halter 1 aus Kunststoff, ein darin gehaltenes, im Wesentlichen zylindrisches Gefäss 2, einen Deckel 3 sowie einen Filterkolben 4. Das Gefäss 2 kann transparent sein und besteht insbesondere aus hitzebeständigem Glas; es kann jedoch auch z.B. aus Kunststoff oder Metall bestehen.

Der Halter 1 umfasst einen oberen, die Seitenwand 21 des Gefässes 2 umgreifenden Haltering 12 und einen in den Figuren nicht sichtbaren, unteren Haltering, der in einen nach unten hin durch eine kreisförmige zentrale Öffnung durchbrochenen Boden übergeht. Die Halteringe sind durch zwei sich in der Längsichtung des Gefässes erstreckende Längsstreben 13 und 14 miteinander verbunden. Ebenfalls mit dem oberen Haltering 12 und dem unteren Haltering verbunden ist ein Handgriff 15 zum Ergreifen des Getränkebereiters.

Das nach oben offene Gefäss 2 besteht aus einem Boden, der leicht nach oben gewölbt sein kann, und einer umlaufenden Seitenwand 21 von kreiszylindrischer Grundform. Anders als bei den meisten Kaffeebereitern des Standes der Technik ist in der Seitenwand kein Ausgiesser ausgebildet. Die Seitenwand 21 endet leicht unterhalb des oberen Randes des oberen Halterings 12 des Halters 1.

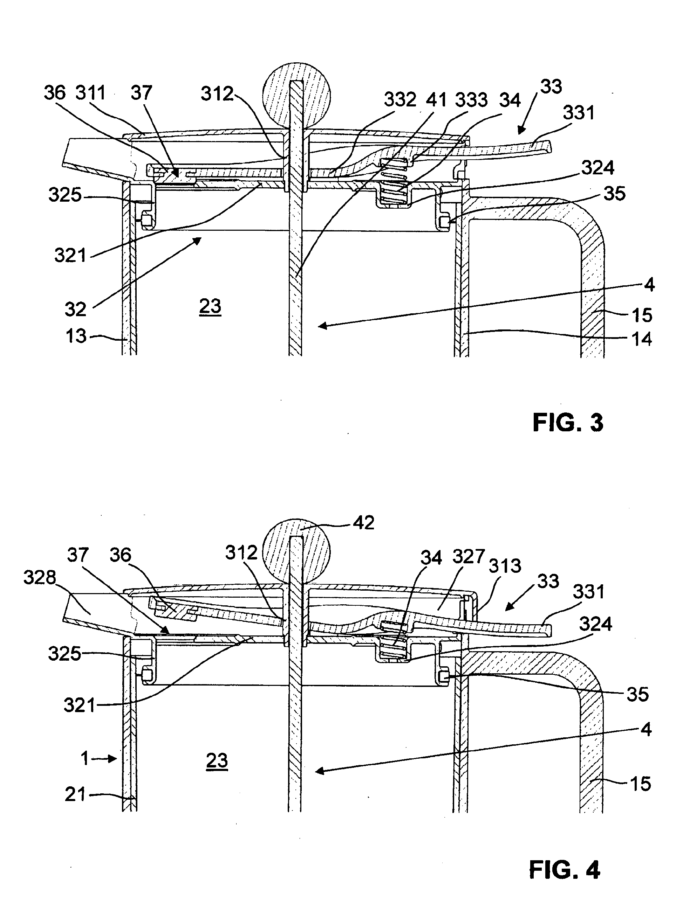

In das Gefäss 2 ist der Behälterverschluss bzw. Deckel 3 eingesetzt. Dieser ist zweiteilig aufgebaut und umfasst ein Deckelunterteil 32 und ein Deckeloberteil 31. Das Deckelunterteil 32 weist eine im Wesentlichen ebene Deckwand 321 auf, welche die obere Gefässöffnung weitgehend überdeckt und zusammen mit dem Gefäss 2 einen Gefässinnenraum 23 begrenzt. In der Deckwand 321 ist eine Ausgiessöffnung 37 ausgebildet, die in den Figuren 3 und 4 erkennbar ist. In der Figur 3 ist die Ausgiessöffnung 37 durch einen Verschlusskörper 36 in Form eines Stopfens dichtend verschlossen.

Ausgehend von der Deckwand 321 erstreckt sich an deren äusserem Rand eine zylindrische Seitenwand 327 nach oben, die von einem schnabelartigen Ausgiesser 328 sowie von einer Ausnehmung für einen Verschlusshebel 33 unterbrochen wird. Ebenfalls ausgehend von der Deckwand 321 erstreckt sich eine umlaufende, zylindrische Schürze 325 von etwas geringerem Durchmesser nach unten in das Gefäss 2 hinein. Von der Schürze aus erstreckt sich ein Paar ringförmiger, beabstandeter Stege nach aussen, die eine Aufnahme für eine umlaufende, ringförmige Dichtung 35 mit einer radial nach aussen vorstehenden Dichtlippe bilden. Hierdurch wird der Deckel 3 nach dem Einstecken einerseits relativ fest im Gefäss 2 gehalten, und andererseits wird eine Abdichtung zwischen dem Gefäss und dem Deckel gebildet, die verhindert, dass Flüssigkeit zwischen Gefäss und Deckel austreten kann.

Der langgestreckt geformte Verschlusshebel 33 ist schwenkbar am Deckelunterteil 32 befestigt. Dazu weist er an einem zentralen Hauptabschnitt 332 zwei in den Zeichnungen nicht gezeigte, lateral vorstehende, koaxiale, horizontale Lagerzapfen auf, die in zwei maulförmige, nach vorne, d.h. in Richtung des Ausgiessers 328, hin offene Lagerelemente eingeklickt sind, welche in den Zeichnungen ebenfalls nicht sichtbar sind.

Im seinem vorderen, dem Ausgiesser 328 zugewandten Endbereich des Verschlusshebels 33 ist eine runde Öffnung ausgebildet, in die der Verschlusskörper 36 eingesetzt ist. Während der Verschlusshebel 33 selbst, ebenso wie der restliche Deckel, aus einem schlagzähen und relativ harten Kunststoff wie z.B. Polyproyplen gefertigt ist, besteht der Verschlusskörper 36 aus einem verhältnismässig weichen Material, z.B. Silikonkunststoff, um eine gute Dichtwirkung zu erzielen.

An seinem hinteren, dem Ausgiesser abgewandten Ende steht der Verschlusshebel 33 mit einem Betätigungsbereich 331 aus dem Deckelunterteil 32 heraus radial vor und lässt sich durch Druck mit dem Daumen des Benutzers nach unten (d.h. in einen Betätigungsrichtung) leicht um seine horizontale Schwenkachse verschwenken, so dass der Verschlusskörper 36 von der Ausgiessöffnung 37 abgehoben wird und die Ausgiessöffnung freigibt. Der Verschlusshebel 33 ist dann somit in einer Öffnungsstellung, wie sie in den Figuren 2 und 4 gezeigt ist.

Mittels einer auf Druck wirkenden Schraubenfeder 34 ist der Hebel in die verschliessende Stellung vorbelastet. Die Schraubenfeder 34 ist im hinteren, dem Ausgiesser abgewandten Bereich des Hebels, aber noch innerhalb der Seitenwand 327 des Deckelunterteils angeordnet. Sie ist in einer topfförmigen Vertiefung 324 der Deckwand 321 aufgenommen, die einen grösseren Federweg ermöglicht, als dies ohne eine solche Vertiefung möglich wäre. Nach oben hin greift sie in eine ringförmige Federaufnahme 333 an der Unterseite des Verschlusshebels 33 ein. Durch die Vertiefung 324 und die Federaufnahme 333 ist die Feder gegen seitliche Verschiebungen oder gar ein Herausspringen gesichert. In der in den Figuren 1 und 3 gezeigten Verschliessstellung des Verschlusshebels 33 verschliesst der Verschlusskörper 36 also die Ausgiessöffnung 37 insbesondere aufgrund des Federdrucks, welcher die Schraubenfeder 34 auf den Verschlusshebel 33 ausübt.

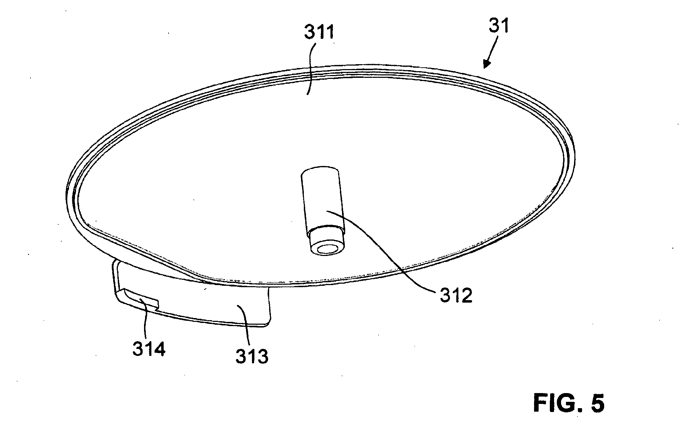

Das Deckeloberteil 31, welches insbesondere in der Figur 5 gezeigt ist, überdeckt mit seiner oberen Deckwand 311 den oberen Rand der Seitenwand 327 des Deckelunterteils 32. Von einer zentralen Öffnung der oberen Deckwand aus erstreckt sich eine einstückig mit der oberen Deckwand gefertigte Führungshülse 312 vertikal nach unten, in welcher die Kolbenstange 41 des Filterkolbens 4 geführt ist. Der Verschlusshebel 33 und die untere Deckwand 321 des Deckelunterteils 32 weisen jeweils eine Durchgangsöffnung auf, durch welche hindurch sich die Führungshülse 312 erstreckt. Dabei ist die Durchgangsöffnung des Verschlusshebels 33 genügend gross, um die Schwenkbewegung des Hebels nicht zu behindern. Die Durchgangsöffnung der unteren Deckwand 321 ist dagegen passgenau zur Führungshülse 312. Im Bereich des unteren Endes der Führungshülse sind mehrere flache, kugelsegmentförmige Rastnocken auf der Oberfläche der Führungshülse ausgebildet (in den Zeichnungen nicht sichtbar), die nach dem Einstecken der Führungshülse eine lösbare Rastverbindung zwischen Führungshülse 312 und Deckelunterteil 32 bilden. Dadurch ist die Führungshülse an zwei unterschiedlichen vertikalen Stellen gegen seitliche Verschiebungen und somit gegen Kippbewegungen gesichert. Dadurch wird einerseits die vertikale Führung der Kolbenstange 41 verbessert, und andererseits wird das Risiko reduziert, dass die Verbindung zwischen der oberen Deckwand 311 und der Führungshülse 312 bricht. Das Deckeloberteil 31 und das Deckelunterteil 32 sind dadurch insbesondere derart miteinander verbunden, dass sie relativ zueinander um die vertikale Achse verdrehbar sind.

Vom äusseren Rand der Deckwand 311 des Deckeloberteils 31 erstreckt sich eine Lasche 313 nach unten hin. In Umfangsrichtung ist die Lasche 313 im Vergleich zur Breite des Verschlusshebels 33 im Bereich seines Betätigungsbereiches 331 etwas länger ausgebildet. In alternativen Ausführungsformen könnte die Lasche aber auch wesentlich länger ausgebildet sein und sich über beinahe den gesamten Umfang der Deckwand 311 erstrecken. In die vertikale Richtung ist die Lasche 313 etwa gleich lang ausgebildet wie die Höhe der Seitenwand 327 des Deckelunterteils 32. Wie in den Figuren 1 und 2 gezeigt ist, ist die Lasche 313 in radialer Richtung auf der Aussenseite der Seitenwand 327 angeordnet, welche eine radiale Begrenzungsfläche des Deckelunterteils 32 bildet. Die Position der Lasche 313 entlang der Umfangsrichtung in Bezug auf das Deckelunterteil 32 und insbesondere auf den Verschlusshebel 33 ist dadurch für den Benutzer jederzeit leicht erkennbar.

Das Deckeloberteil 31 mit der Lasche 313 ist derart gegenüber dem Deckelunterteil 32 und dem daran angebrachten Verschlusshebel 33 verdrehbar, dass es eine Blockierstellung aufweist, wie sie in den Figuren 2 und 4 gezeigt ist, in welcher der Verschlusshebel 33 in seiner Öffnungsstellung blockiert ist. Die Lasche 313 bildet dabei in unmittelbarer Nähe des Betätigungsbereiches 331 einen oberen Anschlag für den Verschlusshebel 33, wodurch ein Verschwenken des Verschlusshebels 33 zurück in seine Verschliessstellung verhindert wird. Der Benutzer kann dadurch das im Gefäss 2 enthaltene Getränk bequem ausschenken, ohne dass er dabei einen Druck auf den Betätigungsbereich 331 des Verschlusshebels 33 ausüben muss. Mittels Zurückdrehen des Deckeloberteils 31 in die in den Figuren 1 und 3 gezeigte Freigabestellung wird ein Verschwenken des Verschlusshebels 33 zurück in die Verschliessstellung wieder ermöglicht.

Entlang der unteren Kante der Lasche 313 erstreckt sich eine Hintergreifstruktur 314 von derjenigen vertikalen Kante der Lasche 313 aus, welche in der in Figur 1 gezeigten Freigabestellung in Umfangsrichtung vom Betätigungsbereich 331 des Verschlusshebels 33 weg und zum Ausgiesser 328 hin weist. Im Vergleich zur Lasche 313 erstreckt sich die Hintergreifstruktur 314 jedoch über einen wesentlich kleineren Winkelbereich. Die an der radialen Innenseite der Lasche 313 angeordnete Hintergreifstruktur 314 ist dazu ausgebildet, in der Blockierstellung des Deckeloberteils 31 eine Rückhaltestruktur 329 zu hintergreifen, welche an der radialen Aussenseite der Seitenwand 327 des Deckelunterteils 32 in einem Bereich neben der Ausnehmung für den Verschlusshebel 33 angebracht ist. Dieses Hintergreifen bewirkt, dass das Deckeloberteil 31 aufgrund der Federkraft der Druckfeder 34 in der Blockierstellung nicht in die vertikale Richtung nach oben hin weggedrückt wird. Die Hintergreifstruktur 314 und die Rückhaltestruktur 329 sichern das Deckeloberteil 31 somit in der Blockierstellung am Deckelunterteil 32.

Die Rückhaltestruktur 329 kann, wie im vorliegenden Ausführungsbeispiel, L-förmig ausgebildet sein und einen Anschlag für die Hintergreifstruktur 314 in die Umfangsrichtung bilden. Ein Überdrehen des Deckeloberteils 31 über die Blockierstellung hinaus wird dadurch verhindert. Die in Umfangsrichtung zur Rückhaltestruktur 329 hin weisende Kante der Hintergreifstruktur 314 kann zudem abgeschrägt ausgebildet sein, um ein ungewolltes Haken beim Verdrehen des Deckeloberteils 31 in Richtung der Blockierstellung zwischen der Rückhaltestruktur 329 und der Hintergreifstruktur 314 zu verhindern. Alternativ können die Rückhaltestruktur 329 und die Hintergreifstruktur 314 in der Blockierstellung auch eine Bajonettverbindung miteinander eingehen.

Der Filterkolben weist am oberen Ende der Kolbenstange 41 einen Knopf 42 als Betätigungselement auf. Am unteren Ende ist ein in den Figuren nicht gezeigter Stempelfilter an der Kolbenstange angebracht, welcher eine beliebige, bereits bekannte Bauart aufweisen kann. Derartige Filterkolben mit Stempelfilter sind insbesondere bei sogenannten "French Press" Getränkebereitern oft anzutreffen und daher in verschiedensten Ausgestaltungen seit langem bekannt.

Die Erfindung ist selbstverständlich nicht auf das vorstehende Beispiel beschränkt, und eine Vielzahl von Abwandlungen sind möglich. So kann insbesondere der Verschlusshebel in seiner Form und Anordnung auch anders ausgestaltet sein. Beispielsweise braucht der Betätigungsbereich nicht radial ausserhalb des Deckelunterteils angeordnet zu sein, sondern kann auch innerhalb des Deckelunterteils liegen und von oben her durch eine Aussparung oder Öffnung im Deckeloberteil zugänglich sein. Anstatt einer am äusseren Rand angeordneten Lasche könnte das Deckeloberteil dann zum Beispiel ein nach unten ragendes, innerhalb der Seitenwand des Deckelunterteils angeordnetes Element aufweisen, welches in der Blockierstellung einen Anschlag mit dem Verschlusshebel bildet. Statt des in den Zeichnungen dargestellten Gefässhalters kann auch ein beliebiger anderer Halter verwendet werden, oder der Halter kann auch ganz entfallen, wenn z.B. das Gefäss einen angeformten Handgriff aufweist. Obwohl dies nicht bevorzugt ist, könnte zumindest ein Teil des Behälterverschlusses auch einstückig mit dem Gefäss oder dem Gefässhalter ausgebildet sein. Beispielsweise könnte das Deckelunterteil der in den Figuren 1 bis 5 gezeigten Ausführungsform einstückig mit dem Gefäss oder dem Gefässhalter ausgebildet sein. Eine Vielzahl weiterer Abwandlungen ist möglich. Insbesondere versteht es sich von selbst, dass der Mechanismus des Verschlusshebels für das Verschliessen und Öffnen der Ausgiessöffnung auch gänzlich anders ausgestaltet sein könnte und unabhängig von der Blockierfunktion des Deckeloberteils in Bezug auf die Öffnungsstellung des Verschlusshebels ist. So muss der Verschlusskörper beispielsweise nicht zwingend am Verschlusshebel angebracht sein. Der Verschlusshebel könnte zum Beispiel auch indirekt mit dem Verschlusskörper zusammenwirken, wie dies beispielsweise bei den in den Dokumenten US 2004/0108336 und DE 295 04 343 beschriebenen Getränkebehältern der Fall ist. Die Ausgiessöffnung könnte auch im Bereich der Seitenwand des Deckelunterteils ausgebildet sein, und der Verschlusshebel könnte um eine vertikale Achse verschwenkbar und entsprechend anstatt in die vertikale Richtung entlang der Umfangsrichtung bedienbar sein. Das Drehelement würde dann mit dem Verschlusshebel einen Anschlag in der Umfangsrichtung bilden, um diesen in der Öffnungsstellung zu blockieren. Selbstverständlich kann der Filterkolben entfallen.

**BEZUGSZEICHENLISTE**

| | | | |
|---|---|---|---|
| 1 | Halter | 325 | Schürze |
| 12 | Oberer Ring | 327 | Seitenwand |
| 13, 14 | Längsstrebe | 328 | Ausgiesser |
| 15 | Haltegriff | 329 | Rückhaltestruktur |
| 2 | Glasgefäss | 33 | Verschlusshebel |
| 21 | Seitenwand | 331 | Betätigungsbereich |
| 23 | Innenraum | 332 | Hauptabschnitt |
| 3 | Deckel | 333 | Federaufnahme |
| 31 | Deckeloberteil | 34 | Druckfeder |
| 311 | Deckwand | 35 | Dichtring |
| 312 | Führungshülse | 36 | Verschlusskörper |
| 313 | Lasche | 37 | Ausgiessöffnung |
| 314 | Hintergreifstruktur | 4 | Filterkolben |
| 32 | Deckelunterteil | 41 | Kolbenstange |
| 321 | Deckwand | 42 | Betätigungsknopf |
| 324 | Vertiefung | | |

## Patentansprüche

1. Behälterverschluss (3) zum Verschliessen eines Gefässes (2) mit einem Gefässinnenraum (23), aufweisend
eine Ausgiessöffnung (37), welche dazu dient, eine Fluidverbindung vom Gefässinnenraum (23) nach aussen hin zu bilden, um Flüssigkeit aus dem Gefäss (2) auszugiessen;
einen Verschlusskörper (36), mittels welchem die Ausgiessöffnung (37) verschliessbar ist; sowie
einen mit dem Verschlusskörper (36) zusammenwirkenden Verschlusshebel (33) mit einem Betätigungsbereich (331), der durch Druck mit einem Finger des Benutzers in einer Betätigungsrichtung bedienbar ist, um den Verschlusshebel (33) von einer Verschliessstellung, in welcher der Verschlusskörper (36) die Ausgiessöffnung (37) verschliesst, in eine Öffnungsstellung, in welcher der Verschlusskörper (36) die Ausgiessöffnung (37) freigibt, zu verschwenken,
**dadurch gekennzeichnet, dass**
der Behälterverschluss (3) ausserdem ein Drehelement (31) aufweist, welches relativ zum Verschlusshebel (33) um eine Achse verdrehbar ist, die sich im Wesentlichen in dieselbe Richtung wie die Betätigungsrichtung erstreckt, um in einer Blockierstellung einen Anschlag mit dem Verschlusshebel (33) zu bilden und den Verschlusshebel (33) dadurch in seiner Öffnungsstellung zu blockieren und in einer Freigabestellung ein Verschwenken des Verschlusshebels (33) zwischen der Verschliessstellung und der Öffnungsstellung zu erlauben.

2. Behälterverschluss (3) gemäss Anspruch 1, wobei die Betätigungsrichtung des Verschlusshebels (33) im Wesentlichen einer vertikalen Richtung entspricht, und wobei das Drehelement (31) einen Anschlag für den Verschlusshebel (33) nach oben hin bildet.

3. Behälterverschluss (3) gemäss einem der Ansprüche 1 oder 2, wobei der Verschlusshebel (33) in Richtung seiner Verschliessstellung federbelastet ist.

4. Behälterverschluss (3) gemäss einem der vorhergehenden Ansprüche, wobei der Behälterverschluss (3) einen Bereich (32) aufweist, gegenüber welchem das drehbare Element (31) zwischen der Blockierstellung und der Freigabestellung verdrehbar ist, und an welchem eine Rückhaltestruktur (329) angebracht ist, und wobei das drehbare Element (31) eine Hintergreifstruktur (314) aufweist, welche in der Blockierstellung derart mit der Rückhaltestruktur (329) zusammenwirkt, dass eine Bewegung des drehbaren Elements (31) entgegen der Betätigungsrichtung gegenüber dem genannten Bereich (32) verhindert ist.

5. Behälterverschluss (3) gemäss Anspruch 4, wobei die Rückhaltestruktur (329) und die Hintergreifstruktur (314) in der Blockierstellung einen Drehanschlag bilden.

6. Behälterverschluss (3) gemäss einem der vorhergehenden Ansprüche, aufweisend eine Deckwand (321), innerhalb welcher die Ausgiessöffnung (37) angeordnet ist, und welche dazu ausgebildet ist, das Gefäss (2) nach oben hin zumindest teilweise zu überdecken, um gemeinsam mit dem Gefäss (2) den Gefässinnenraum (23) zu begrenzen.

7. Behälterverschluss (3) gemäss Anspruch 6, wobei der Verschlusshebel (33) oberhalb der Deckwand (321) um eine horizontale Achse schwenkbar gelagert ist.

8. Behälterverschluss (3) gemäss einem der Ansprüche 6 oder 7, wobei der Behälterverschluss (3) ein Unterteil (32) umfasst, welches die Deckwand (321) bildet, und wobei der Behälterverschluss (3) ein davon getrennt ausgebildetes, das Unterteil (32) und den Verschlusshebel (33) zumindest teilweise überdeckendes Oberteil (31) umfasst, welches gegenüber dem Unterteil (32) verdrehbar ist, und welches das drehbare Element bildet.

9. Behälterverschluss (3) gemäss Anspruch 8, wobei das Oberteil (31) eine sich nach unten hin erstreckende Lasche (313) aufweist, welche in der Blockierstellung einen Anschlag mit dem Verschlusshebel (33) bildet.

10. Behälterverschluss (3) gemäss Anspruch 9, wobei das Unterteil (32) eine radiale Begrenzungsfläche (327) aufweist, und wobei die Lasche (313) in radialer Richtung ausserhalb dieser radialen Begrenzungsfläche (327) angeordnet ist.

11. Behälterverschluss (3) gemäss Anspruch 10, wobei das Unterteil (32) eine sich von der Deckwand (321) nach oben hin erstreckende, umlaufende Seitenwand (327) aufweist, welche die radiale Begrenzungsfläche bildet.

12. Getränkebehälter aufweisend ein Gefäss (2) mit einem Gefässboden und einer umlaufenden Seitenwand (21), sowie einen Behälterverschluss (3) gemäss einem der vorhergehenden Ansprüche.

13. Getränkebehälter gemäss Anspruch 12, wobei es sich beim Getränkebehälter um einen Getränkebereiter handelt mit einem im Gefäss (2) vertikal verschiebbaren Filterkolben (4), welcher eine Kolbenstange (41) aufweist, die den Behälterverschluss (3) durchsetzt.

14. Getränkebehälter gemäss einem der Ansprüche 12 oder 13, wobei das Gefäss (2) oder ein Gefasshalter (1), in welchem das Gefäss (2) gehalten ist, eine Rückhaltestruktur (329) aufweist, und wobei das drehbare Element (31) eine Hintergreifstruktur (314) aufweist, welche in der Blockierstellung derart mit der Rückhaltestruktur (329) zusammenwirkt, dass eine Bewegung des drehbaren Elements (31) entgegen der Betätigungsrichtung gegenüber dem Gefäss (2) bzw. Gefässhalter (1) verhindert ist.

## Claims

1. A container closure (3) for closing a vessel (2) with a vessel interior (23), having
a pouring opening (37) which serves to form a fluid communication from the vessel interior (23) to the outside for pouring liquid from the vessel (2) ;
a closure body (36) by means of which the pouring opening (37) is closable; and
a closure lever (33) which interacts with the closure body (36), said closure lever having an operating region (331) which is operable by pressure of a finger of the user in a direction of operation in order to pivot the closure lever (33) from a closing position, in which the closure body (36) closes the pouring opening (37), to an opening position, in which the closure body (36) uncovers the pouring opening (37),
**characterized in that**
the container closure (3) also has a rotating element (31) which is rotatable in relation to the closure lever (33) about an axis which extends essentially in the same direction as the direction of operation, in order to form a stop with the closure lever (33) in a blocking position and thus to block the closure lever (33) in its opening position, and, in a releasing position, to permit pivoting of the closure lever (33) between the closing position and the opening position.

2. The container closure (3) as claimed in claim 1, wherein the direction of operation of the closure lever (33) corresponds substantially to a vertical direction, and wherein the rotating element (31) forms a stop in the upward direction for the closure lever (33).

3. The container closure (3) as claimed in one of claims 1 or 2, wherein the closure lever (33) is spring loaded in the direction of its closing position.

4. The container closure (3) as claimed in one of the preceding claims, wherein the container closure (3) has a region (32), in relation to which the rotatable element (31) is rotatable between the blocking position and the releasing position, and to which a retaining structure (329) is attached, and wherein the rotatable element (31) has an engaging structure (314) which, in the blocking position, interacts with the retaining structure (329) in such a manner that a movement of the rotatable element (31) counter to the direction of operation in relation to said region (32) is prevented.

5. The container closure (3) as claimed in claim 4, wherein the retaining structure (329) and the engaging structure (314) form a rotating limit stop in the blocking position.

6. The container closure (3) as claimed in one of the preceding claims, having a cover wall (321), inside of which the pouring opening (37) is located, and which is formed to at least partially cover the vessel (2) toward the top in order, jointly with the vessel (2), to delimit the vessel interior (23).

7. The container closure (3) as claimed in claim 6, wherein the closure lever (33) is pivotably mounted about a horizontal axis above the cover wall (321).

8. The container closure (3) as claimed in one of claims 6 or 7, wherein the container closure (3) comprises a lower part (32) which forms the cover wall (321), and wherein the container closure (3) comprises an upper part (31) which is formed separately from said lower part and which at least partially covers the lower part (32) and the closure lever (33), said upper part being rotatable in relation to the lower part (32) and forming the rotatable element.

9. The container closure (3) as claimed in claim 8, wherein the upper part (31) has a downwardly extending link (313) which in the blocking position forms a stop with the closure lever (33).

10. The container closure (3) as claimed in claim 9, wherein the lower part (32) has a radial periphery (327) and wherein the link (313) is located outside of said radial periphery (327) in the radial direction.

11. The container closure (3) as claimed in claim 10, wherein the lower part (32) has an encircling side wall (327) which extends upward from the cover wall (321), said side wall forming the radial periphery.

12. A beverage container having a vessel (2) with a vessel bottom and an encircling side wall (21), and a container closure (3) as claimed in one of the preceding claims.

13. The beverage container as claimed in claim 12, wherein the beverage container is a beverage maker having a filter piston (4) which is vertically movable in the vessel (2) and which has a piston rod (41) which penetrates through the container closure (3).

14. The beverage container as claimed in one of claims 12 or 13, wherein the vessel (2), or a vessel holder (1) in which the vessel (2) is held, has a retaining structure (329), and wherein the rotatable element (31) has an engaging structure (314) which, in the blocking position, interacts with the retaining structure (329) in such a manner that a movement of the rotatable element (31) in the direction counter to the direction of operation in relation to the vessel (2) or the vessel holder (1) is prevented.

## Revendications

1. Fermeture de récipient (3) pour fermer un contenant (2) comprenant un espace intérieur de contenant (23), comprenant
une ouverture de déversement (37), laquelle sert à former une liaison fluidique à partir de l'espace intérieur de contenant (23) vers l'extérieur, afin de déverser un liquide hors du contenant (2) ;
un corps de fermeture (36), au moyen duquel l'ouverture de déversement (37) peut être fermée ;
et
un levier de fermeture (33) coopérant avec le corps de fermeture (36) et pourvu d'une région d'actionnement (331) qui, par la pression d'un doigt de l'utilisateur, peut être actionnée dans une direction d'actionnement, afin de pivoter le levier de fermeture (33) à partir d'une position de fermeture, dans laquelle le corps de fermeture (36) ferme l'ouverture de déversement (37), jusqu'à une position d'ouverture, dans laquelle le corps de fermeture (36) libère l'ouverture de déversement (37),
**caractérisée en ce que**
la fermeture de récipient (3) comprend en outre un élément rotatif (31), lequel peut être tourné autour d'un axe par rapport au levier de fermeture (33), lequel axe s'étend essentiellement dans la même direction que la direction d'actionnement, afin de former une butée avec le levier de fermeture (33) dans une position de blocage et de bloquer ainsi le levier de fermeture (33) dans sa position d'ouverture, et de permettre, dans une position de libération, un pivotement du levier de fermeture (33) entre la position de fermeture et la position d'ouverture.

2. Fermeture de récipient (3) selon la revendication 1, dans laquelle la direction d'actionnement du levier de fermeture (33) correspond essentiellement à une direction verticale, et dans laquelle l'élément rotatif (31) forme une butée vers le haut pour le levier de fermeture (33).

3. Fermeture de récipient (3) selon la revendication 1 ou 2, dans laquelle le levier de fermeture (33) est sollicité par ressort en direction de sa position de fermeture.

4. Fermeture de récipient (3) selon l'une quelconque des revendications précédentes, la fermeture de récipient (3) comprenant une région (32), par rapport à laquelle l'élément rotatif (31) peut être tourné entre la position de blocage et la position de libération, et sur laquelle est fixée une structure de retenue (329), et l'élément rotatif (31) comprenant une structure d'engagement par l'arrière (314), laquelle coopère avec la structure de retenue (329) dans la position de blocage de telle sorte qu'un déplacement de l'élément rotatif (31) en sens inverse à la direction d'actionnement par rapport à ladite région (32) soit empêché.

5. Fermeture de récipient (3) selon la revendication 4, dans laquelle la structure de retenue (329) et la structure d'engagement par l'arrière (314) forment une butée de rotation dans la position de blocage.

6. Fermeture de récipient (3) selon l'une quelconque des revendications précédentes, comprenant une paroi de recouvrement (321), à l'intérieur de laquelle est disposée l'ouverture de déversement (37), et laquelle est réalisée pour recouvrir le contenant (2) au moins partiellement vers le haut, afin de délimiter, conjointement avec le contenant (2), l'espace intérieur de contenant (23).

7. Fermeture de récipient (3) selon la revendication 6, dans laquelle le levier de fermeture (33) est monté de manière à pouvoir pivoter autour d'un axe horizontal au-dessus de la paroi de recouvrement (321).

8. Fermeture de récipient (3) selon la revendication 6 ou 7, la fermeture de récipient (3) comportant une partie inférieure (32), laquelle forme la paroi de recouvrement (321), et la fermeture de récipient (3) comportant une partie supérieure (31), réalisée séparément de celle-ci, recouvrant au moins partiellement la partie inférieure (32) et le levier de fermeture (33), laquelle partie supérieure peut être tournée par rapport à la partie inférieure (32), et laquelle forme l'élément rotatif.

9. Fermeture de récipient (3) selon la revendication 8, dans laquelle la partie supérieure (31) comprend une languette (313) s'étendant vers le bas, laquelle forme avec le levier de blocage (33), dans la position de blocage, une butée.

10. Fermeture de récipient (3) selon la revendication 9, dans laquelle la partie inférieure (32) comprend une surface de délimitation radiale (327), et dans laquelle la languette (313) est disposée à l'extérieur de cette surface de délimitation radiale (327) dans la direction radiale.

11. Fermeture de récipient (3) selon la revendication 10, dans laquelle la partie inférieure (32) comprend une paroi latérale périphérique (327) s'étendant vers le haut à partir de la paroi de recouvrement (321), laquelle paroi latérale forme la surface de délimitation radiale.

12. Récipient de boisson comprenant un contenant (2) comprenant un fond de contenant et une paroi latérale périphérique (21), ainsi qu'une fermeture de récipient (3) selon l'une quelconque des revendications précédentes.

13. Récipient de boisson selon la revendication 12, le récipient de boisson étant un préparateur de boisson comprenant un piston filtrant (4) déplaçable verticalement dans le contenant (2), lequel piston filtrant comprend une tige de piston (41) qui traverse la fermeture de récipient (3).

14. Récipient de boisson selon la revendication 12 ou 13, dans lequel le contenant (2) ou un support de contenant (1), dans lequel le contenant (2) est retenu, comprend une structure de retenue (329), et dans lequel l'élément rotatif (31) comprend une structure d'engagement par l'arrière (314), laquelle coopère avec la structure de retenue (329) dans la position de blocage de telle sorte qu'un déplacement de l'élément rotatif (31) en sens inverse à la direction d'actionnement par rapport au contenant (2) ou au support de contenant (1) soit empêché.
